# EUROPEAN PATENT SPECIFICATION

(11) **EP 1 584 493 B1**
(45) Date of publication and mention of the grant of the patent: **20.08.2008**
(21) Application number: 03774227.7
(22) Date of filing: 25.11.2003
(51) Int. Cl.: B60C 5/14, B60C 9/04, B60C 9/20, B60C 11/00, B60C 13/00, B60C 15/06, B60C 19/08

(54) **METHOD OF MANUFACTURING A PNEUMATIC TIRE**
VERFAHREN ZUR HERSTELLUNG EINES LUFTREIFENS
PROCÉDÉ DE FABRICATION D'UN PNEUMATIQUE

(30) Priority: 25.11.2002 JP 2002341177
(43) Date of publication of application: 12.10.2005
(73) Proprietor: Bridgestone Corporation, Tokyo 104-8340 (JP)
(72) Inventor: HIRAI, Nobuyuki, BRIDGESTONE CORP. Tech. Center, Kodaira-shi, Tokyo 187-8531 (JP)
(74) Representative: Whalley, Kevin
(86) International application number: PCT/JP2003/015042
(87) International publication number: WO 2004/048129

(56) References cited:
- EP-A- 0 658 452
- EP-A- 0 875 366
- EP-A- 1 033 218
- EP-A- 1 145 835
- EP-A- 1 201 414
- EP-A- 1 216 852
- EP-A2- 0 492 918
- EP-A2- 0 897 813
- EP-A2- 1 033 218
- EP-A2- 1 040 908
- EP-A2- 1 201 414
- EP-A2- 1 216 852
- WO-A-02/055289
- JP-A- 2001 322 403
- US-A- 3 223 572
- US-A1- 2002 011 297

## Description

This invention relates to a method of manufacturing a pneumatic tire built on a building drum having a basic form of substantially a cylinder, and particularly proposes a technique of largely improving uniformity and balance of the tire.

In general, the conventional building of a green tire using a building drum is carried out by forming a green case comprised of an innerliner, a carcass, bead cores, side rubbers and the like on a building drum, transferring the green case onto another building drum, conducting a tire building so as to expand and deform a central portion of the green case in a radial direction, and affixing a previously formed belt-tread band onto an outer periphery thereof.

When the green tire is built under the action of the building drums, if an innerliner material, carcass ply material, belt material, tread rubber material and the like each previously cut into a given length and width are affixed on the building drum over the full periphery based on the rotating movement of the building drum at the green case forming step of arranging the innerliner, carcass ply side rubber and the like on the building drum and the belt-tread band forming step, an overlap joint portion between a start end portion and a terminal end portion of each material in affixing is necessarily produced at one place in the peripheral direction because the innerliner, carcass ply, side rubber and the like are continuously extended on the drum over full peripheries thereof. Further, there is no guarantee that such an overlap joint portion is equally dispersed in the peripheral direction of the building drum between these materials, so that even if a countermeasure for suppressing the increase of the thickness in the overlap joint portion is taken in each of the materials, it is unavoidable to necessarily lower the uniformity and the balance of a product tire produced by vulcanizing the green tire.

The invention aims to solve the problems inherent to the pneumatic tire produced by using the building drums, and an object thereof is to provide a pneumatic tire wherein the uniformity and the mass balance, are largely improved. Attention is also drawn to one disclosures of EP-A-1033218 and EP-A-1201414.

The method according to the invention is for manufacturing a pneumatic tire comprising a carcass comprising one or more carcass plies toroidally extending between a pair of bead cores and wound at a side portion thereof around the bead core from an inside toward an outside in a widthwise direction of the tire and outward in a radial direction, a bead filler rubber arranged at an outer peripheral side of each bead core between a main body portion and a turnup portion of the carcass, an innerliner arranged at an inner face side of the carcass, a belt arranged on an outer peripheral side of a crown portion of the carcass and comprising one or more belt layers, a tread rubber arranged on an outer peripheral side of the belt to form a treading face, a side rubber arranged on an outer face side of each side portion of the carcass to form a pair of sidewalls of the tire, in which each of the innerliner, the carcass plies and the belt layers is provided with a plurality of joints approximately equally positioned at approximately constant intervals in a peripheral direction through, for example, butt joining, overlap joining or the like, and each of the tread rubber, the bead filler rubbers and the side rubbers is provided with joints positioned at intervals in a direction along an outer profile in a meridional section of the tire and extending substantially in the peripheral direction.

According to the invention, the plurality of the joints through the overlap or butt joining existing in layers of the innerliner, carcass ply and belt layer are equally and dispersedly positioned at constant intervals in the peripheral direction, and these joints formed in each layer are sufficiently balanced statically and dynamically between the mutual joints, so that the joints in each layer can effectively contribute to the realization of excellent uniformity and high balance in the tire without considering the relative position of the joint between the one layer and the other layer and the like. This is particularly effective when the joints are arranged in all of the innerliner, the carcass ply and the belt layer at approximately constant intervals in the peripheral direction.

Furthermore, the joints extending substantially in the peripheral direction and positioned at approximately equal intervals are formed in the tread rubber, the bead filler rubber and the side rubber, whereby joints such as butt joint portions and the like extending in the meridional direction of the tire can be eliminated from layers of the tread rubber, the bead filler rubber and the side rubber and hence excellent uniformity and high balance in the tire can be realized. In this case, the joints in each rubber layer are formed substantially symmetrically with respect to an equatorial plane of the tire, whereby respective tire portions positioned across the equatorial plane can be made sufficiently homogeneous with each other.

This is particularly effective when arranging the joints extending substantially in the peripheral direction in all of the tread rubber, the bead filler rubber and the side rubber.

It is advantageous to continuously arrange the joints in the innerliner substantially in the meridional direction of the tire for facilitating the formation of the joints and enhancing the balance between portions in a product tire positioned across the equatorial plane. This is true even in the carcass ply when the product tire is a radial tire and the carcass ply cord(s) extends substantially in the meridional direction of the tire.

When the joints are extended substantially in the meridional direction of the tire, the interval between the joints is gradually widened outward in the radial direction of the tire.

Moreover, if the carcass ply cord is extended at a certain inclination angle with respect to the meridional direction of the tire, joints similar to those of the belt layer as mentioned below are formed in the carcass ply

In general, the cords of the belt layer are extended at a relatively small angle with respect to the equatorial plane of the tire, for example at an angle of 10-40° crossing therewith, while a raw material for a belt layer of a given width formed by covering a plurality of belt layer cords arranged side by side with rubber becomes continuous in the extending direction of the cord. Therefore, the joints of the belt layer formed by butt-joining the raw material for the belt layer on a periphery are frequently and continuously extended at a certain inclination angle corresponding to the above angle with respect to the meridian of the tire.

In each of the innerliner and the carcass ply, irrespective of extending the joints in the meridional direction, it is preferable that the interval between the joints in the radially inner end portion is made approximately equal to a size obtained by multiplying or dividing a peripheral length of a circle having a diameter of 25.4 mm (1 inch) by an integral number. In this case, the mutual joints in each of the innerliner and the carcass ply can be always positioned at equal intervals in the peripheral direction even in tires having any sizes.

That is, the size such as rim size of a wheel rim to be mounted with the tire is specified by inch as a unit, while the radially inner end portion of each of the innerliner and the carcass ply has a peripheral length substantially corresponding to the peripheral length of the rim size, so that the interval between the joints in such a portion of each of the innerliner and the carcass ply is made approximately equal to the size obtained by multiplying or dividing a standard peripheral length by an integral number when a peripheral length of a circle having a diameter of 25.4 mm (1 inch) is standard, whereby the interval between the mutual joints can be always kept constant in the peripheral direction irrespective of the size of an approved rim.

It is preferable that the joints in each of the bead filler rubber and the side rubber are spirally extended in the radial direction of the tire, and the joints in the tread rubber are helically extended in the widthwise direction of the tire. In this case, one end and the other end of the spirally or helically continuing joint are positioned opposite to each other in, for example, the diameter direction of the tire, whereby the joint portion extending in the meridional direction of the tire can be effectively eliminated and the lowering of the uniformity and the balance in the product tire can be sufficiently prevented.

Moreover, the joints in the tread rubber can be continuously formed from one side part to the other side part in the widthwise direction of the tire, or can be continuously formed from each side part in the widthwise direction of the tire to a central part in the widthwise direction of the tire. In the former case, the joint portion extending from the tread rubber in the meridional direction of the tire can be effectively eliminated. In the latter case, the symmetry of the joints in the tread rubber and hence the wind-laminated state of the tread rubber material with respect to the equatorial plane of the tire can be more enhanced.

If it is intended to more improve the tire performances by constituting the tread rubber with a base rubber located at an inner layer side and a cap rubber located at an outer layer side, it is preferable that mutually independent joints arranged in intervals in a direction along an outer profile at the meridional section of the tire and extending substantially in the peripheral direction are formed in each of the base rubber and the cap rubber for clearly dividing the base rubber and the cap rubber to sufficiently develop the function of each rubber as is expected.

When the tread rubber includes a high electrically conductive rubber existing in a middle portion in the widthwise direction of the tire and continuing over a full thickness in the radial direction of the tire, it is preferable to provide the high electrically conductive rubber with helically and spirally formed joints extending in a direction along an outer profile at the meridional section of the tire and in the radial direction of the tire and extending substantially in the peripheral direction.

When the joints are formed in the high electrically conductive rubber as mentioned above, the high electrically conductive rubber can be strongly bonded to the adjacent tread rubber portion made of different material over a sufficiently large area and durability against accidental peeling or the like of the tread rubber can be enhanced.

When a belt reinforcing layer including cord(s) extending substantially in the peripheral direction and covering the belt over the full width thereof is arranged between the belt and the tread rubber, it is preferable that joints extending substantially in the peripheral direction at given intervals in a direction along an outer profile at the meridional section of the tire are arranged in the belt reinforcing layer, for example by helically winding and joining a ribbon for the reinforcing layer, which is formed by coating plural aligned cords with rubber, in the widthwise direction of the tire.

In this case, the joint portion extending in the meridional direction of the tire can be eliminated as far as possible likewise the aforementioned joints in each of the tread rubber, the bead filler rubber and the side rubber to more effectively improve the uniformity and the balance of the tire.

When a squeegee rubber layer is arranged on at least one of an inner face side and an outer face side of the carcass ply, or when a belt under cushion rubber is arranged on a side portion of the belt and at its inner face side, or when a tread under cushion rubber is arranged at an inner face side of the tread rubber, or when a chafer rubber is arranged on a side of the bead portion at least contacting with a rim flange, it is preferable that joints extending substantially in the peripheral direction at intervals in a direction along the outer profile at the meridional section of the tire are arranged in the squeegee rubber layer, the belt under cushion rubber, the tread under cushion rubber or the chafer rubber due to the same reasons as mentioned above. Also, when a side reinforcing layer including cords extending substantially in the peripheral direction of the tire is arranged at an inner face side of the side rubber, it is preferable that the side reinforcing layer is provided with joints extending substantially in the peripheral direction at intervals in a direction along the outer profile at the meridional section of the tire due to the same reasons.
The invention will be further described with reference to the accompanying drawings, wherein

FIG. 1 is a partial perspective view partly shown in section of an embodiment of the invention.

FIG. 2 is a view illustrating an arrangement of an insert reinforcing layer and a flipper.

FIG. 3 is a sectionally perspective view illustrating an arrangement of a side reinforcing rubber.

FIG. 4 is a sectionally perspective view illustrating another arrangement of a side reinforcing rubber.

FIG 5 is a view illustrating examples of the invention.

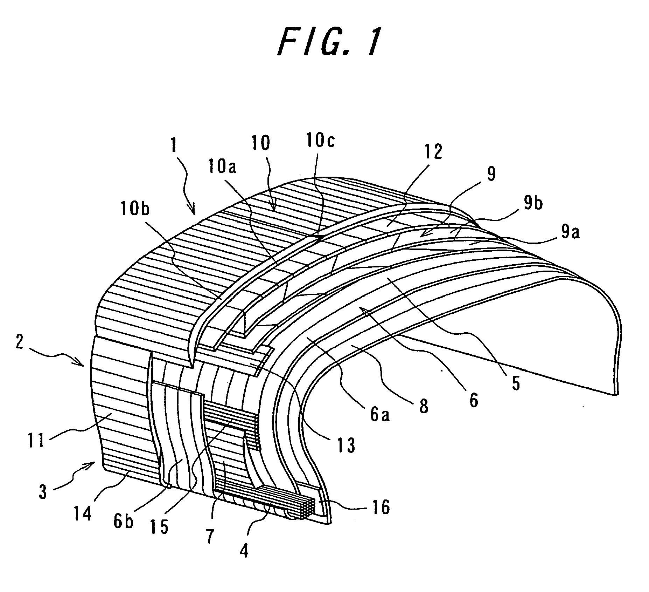

In an embodiment of the invention shown in FIG. 1, numeral 1 is a tread portion, numeral 2 a sidewall portion continuously extending inward from each side edge of the tread portion 1 in a radial direction, and numeral 3 a bead portion continuing from an inner peripheral side of the sidewall portion 2.

Between bead cores 4 arranged in the respective bead portions 3 is toroidally extended one or more carcass plies, one carcass ply 5 in the illustrated embodiment, and each side portion thereof is wound around the bead core 4 outward in the radial direction to constitute a carcass, a radial carcass 6 in this embodiment. A bead filler rubber 7 is arranged between a main body portion 6a and a turnup portion 6b of the radial carcass 6 on an outer peripheral side of the bead core 4.

Also, an innerliner 8 is arranged on an inner face side of the radial carcass 6, while a belt 9 comprised of one or more layers, two belt layers 9a, 9b in the illustrated embodiment is arranged on an outer peripheral side of a crown portion of the radial carcass 6. Furthermore, a tread rubber 10 forming a treading face is arranged on an outer peripheral side of the belt 9, while a side rubber 11 forming a sidewall of the tire is arranged on an outer face side of a side portion of the radial carcass 6.

In the illustrated embodiment, a belt reinforcing layer 12 including, for example, organic fiber cords extending substantially in a peripheral direction and covering the belt 9 over the full width thereof is further arranged between the belt 9 and the tread rubber 10, and a belt under cushion rubber 13 is arranged on each side portion of the belt 9 between the belt 9 and the radial carcass 6, and a chafer rubber 14 is arranged on a side of the bead portion at least contacting with a rim flange, and a side reinforcing layer 15 including cords extending substantially in the peripheral direction is arranged on an inner face side of the side rubber 11 between the main body portion 6a and the turnup portion 6b of the radial carcass 6 and the bead filler rubber 7.

In the figure, numeral 16 is a canvas chafer arranged between the innerliner 8 and the radial carcass 6 in the vicinity of the bead core 4.

In the tire having such constitutional members, the tread rubber 10 is further constructed with a base rubber 10a located at an inner layer side and a cap rubber 10b located at an outer layer side, and further a high electrically conductive rubber 10c existing in a widthwise middle portion of the treading face and continuing over the full thickness of the tread rubber 10 in a radial direction of the tire.

In the invention, plural joints positioned at approximately constant intervals in the peripheral direction and formed through butt joining, overlap joining or the like as shown by a thin line in the figure are arranged in each of the innerliner 8, the carcass ply 5 and the belt layers 9a, 9b. The interval between the joints continuously extending substantially in the meridional direction of the tire in each of the innerliner 8 and the carcass ply 5 is made an equal interval at an inner end part in the radial direction thereof substantially corresponding to a size obtained by multiplying or dividing a peripheral length of a circle having a diameter of 1 inch by an integral number.

On the other hand, the plural joints in the belt layers 9a, 9b are generally extended at a given inclination angle with respect to the meridian of the tire in connection with the required extending angle of the cord.in the belt layer with respect to an equatorial plane of the tire.

In each of the tread rubber 10, the bead filler rubber 7 and the side rubber 11 are arranged joints extending substantially in the peripheral direction, which are positioned at intervals in a direction along an outer profile at the meridional section of the tire. That is, the joints are positioned at intervals in the widthwise direction of the tire in case of the tread rubber 10, and at intervals in the radial direction of the tire in case of the bead filler rubber 7 and the side rubber 11.

In this case, each of the joints extending in the peripheral direction is preferably formed continuously or near to continuity as far as possible from one side to the other side in the widthwise direction of the tire or from an inner edge to an outer edge in the radial direction of the tire in each of the rubbers 10, 7 and 11 in order to avoid the formation of separate joints having an extending component in the meridional direction of the tire, which becomes a factor of lowering the uniformity and the balance of the tire, as far as possible. For this end, it is preferable that the joints in the tread rubber 10 are helically extended in the widthwise direction of the tire, and the joints in each of the bead filler rubber 7 and the side rubber 11 are spirally extended in the radial direction of the tire.

The joints in the tread rubber 10 are more preferably continued from one side part to the other side part in the widthwise direction of the tire without interruption. When the tread rubber 10 having a large thickness is formed by helically winding a narrow-width rubber ribbon, in order to prevent damage in the winding of the rubber ribbon such as accidental winding break, change of winding posture or the like and hence a disruption of balance between tire portions of a product tire with respect to the equatorial plane due to the winding break or the like, it is preferable that the rubber ribbon is helically wound from each side part in the widthwise direction of the tire to a widthwise central part, whereby helically extending joints of the tread rubber 10 are disrupted in the widthwise central part of the tread once. This is true in the case that the tread rubber 10 is constituted with base rubber 10a and the cap rubber 10b or is further added with the high electrically conductive rubber 10c.

That is, each of the base rubber 10a and the cap rubber 10b can be formed with continuing the joints from one side part to the other side part, or may be formed with interruption at the central part in the widthwise direction of the tread once.

Moreover, when the high electrically conductive rubber 10c is further arranged, it is required that the joints are discontinued at the middle part in the widthwise direction of the tread once irrespective of the tread rubber 10 having a two layer structure of base rubber 10a and cap rubber 10b, and a starting material of the high electrically conductive rubber is wound and laminated adjacent to such a discontinued portion. In this case, the joints of the high electrically conductive rubber 10c are preferably positioned at intervals in the widthwise direction and the radial direction of the tire, respectively, and extended substantially in the peripheral direction.

This is also true in the belt under cushion rubber 13, the chafer rubber 14, a tread under cushion rubber arranged at an inner face side of the tread rubber 10 (not shown), and the like. Also, the joints of these rubbers are positioned at intervals in a direction along an outer profile at the meridional section of the tire and continuously extended substantially in the peripheral direction, whereby excellent uniformity and balance of a product tire can be advantageously obtained while eliminating the formation of joints having an extending component in the meridional direction of the tire as far as possible.

Further, it is preferable that the joints positioned at intervals in the widthwise direction of the tire and continuously extending substantially in the peripheral direction are formed in the belt reinforcing layer 12 by helically and continuously winding a reinforcing ribbon made by covering a plurality of aligned cords with rubber from one side part to the other side part in the widthwise direction of the tire, and the joints positioned at intervals in the radial direction of the tire and continuously extending substantially in the peripheral direction are formed in the side reinforcing layer 15 by spirally winding a reinforcing ribbon made by covering a plurality of aligned cords with rubber from an inner peripheral side to an outer peripheral side or in a direction opposite thereto at a given zone in the radial direction for the same reasons as mentioned above.

Moreover, the side reinforcing layer 15 may be arranged at an outer face side of the bead filler rubber 7 or at an outer face side of the turnup portion 6b of the radial carcass 6 or at an outward side of the turnup portion 6b in the radial direction instead of the illustrated embodiment.

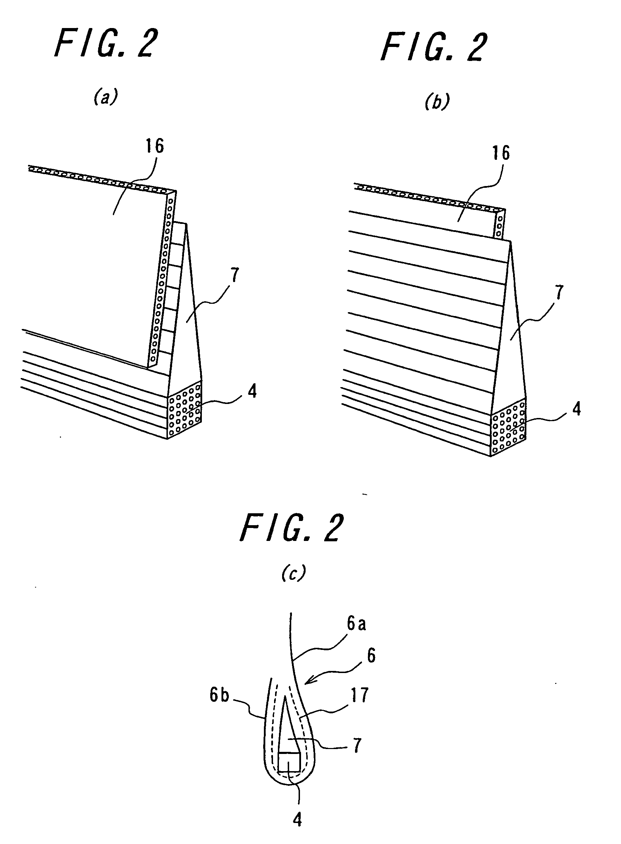

Instead of or in addition to the above side reinforcing layer, an insert reinforcing layer 16 in which organic fiber cords or steel cords are extended at an inclination angle of 30-70° with respect to the meridian of the tire may be arranged at an outer face side or an inner face side of the bead filler rubber 7 as shown in FIGS. 2(a), (b). Further, a flipper 17 enveloping the bead core 4 and the bead filler rubber 7 with the same extending organic fiber cords such as nylon cords may be arranged as shown by a schematically section view in FIG. 2(c).

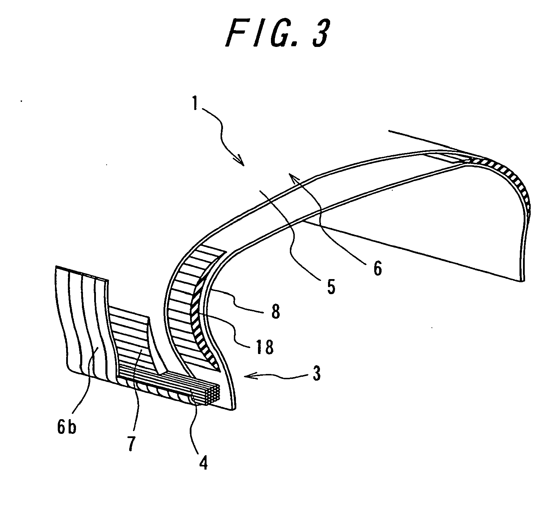

FIG. 3 is a view illustrating another embodiment, in which a side reinforcing rubber 18 having substantially a crescent shape at the meridional section of the tire is arranged at a region, for example, from the bead portion 3 to the tread portion 1 in the side portion of the tire between the inner liner 8 and the carcass ply 5, and also joints through butt joining, overlap joining or the like are arranged in the side reinforcing rubber 18 so as to position at intervals in a direction along the outer profile at the meridional section of the tire and extend substantially in the peripheral direction. In this case, joints extending in the meridional direction of the tire can be advantageously eliminated from the side reinforcing rubber 18, which can improve the uniformity and the mass balance.

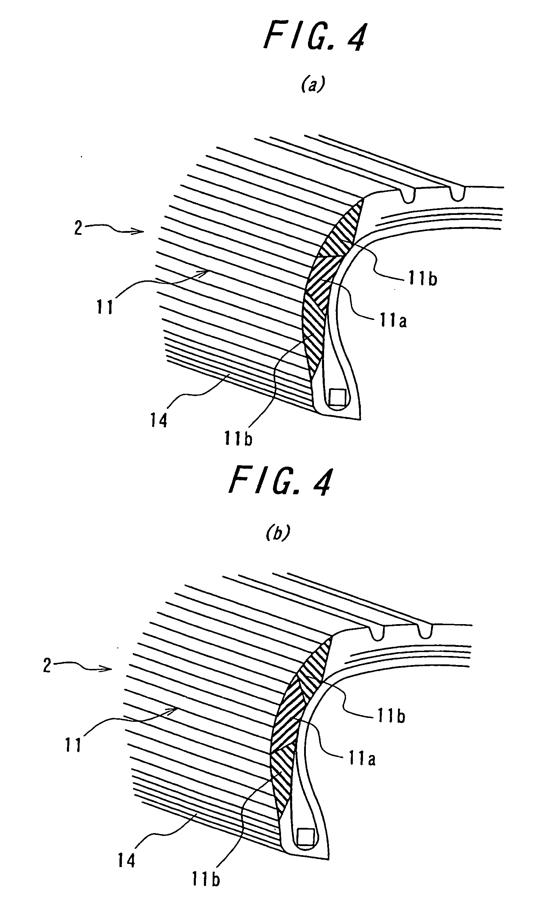

FIG. 4 shows a case that the side rubber is constituted with two kinds of black rubber and white rubber.

In this case, the joints positioned at intervals in a direction along the outer profile at the meridional section of the tire and extending substantially in the peripheral direction are formed spirally in the radial direction in each of white rubber 11a arranged in a middle part of the sidewall portion 2 and black rubbers 11b arranged adjacent to inner and outer sides of the white rubber 11a in the radial direction.

Thus, joints extending in the meridional direction can also be effectively eliminated from the side rubber 11.

Also, a border line between the white rubber 11a and the black rubber 11b extends in a direction such that a width of the white rubber 11a in the radial direction of the tire gradually narrows toward the outer surface side of the side rubber 11 as shown in FIG. 4(a) when the white rubber 11a is first arranged and thereafter the black rubber 11b is arranged, and extends in a direction such that the width gradually widens toward the outer surface side of the side rubber 11 as shown in FIG. 4(b) when the white rubber 11a is arranged afterward.

Moreover, when the white rubber 11a is not required to have comparatively a thickness though it is not shown, it is possible to arrange the white rubber so as to overlap with a given region of an outer surface of the side rubber formed as shown in FIG. 1.

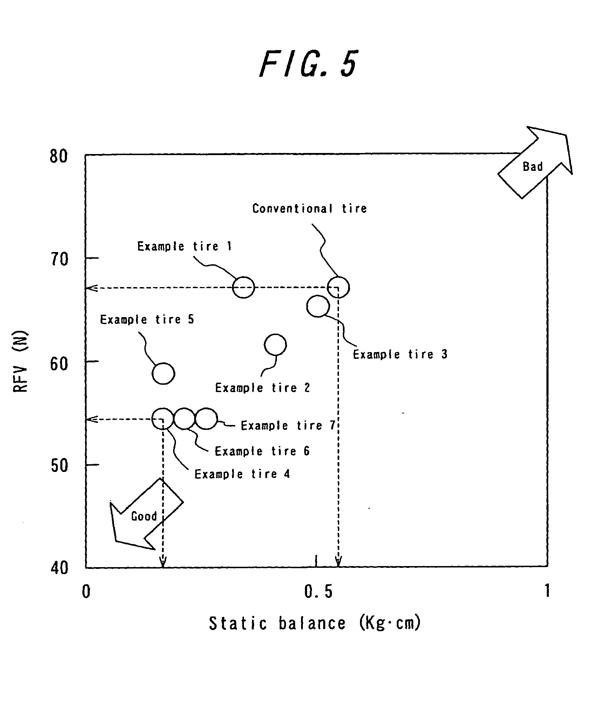

There are provided example tires having a structure according to the invention and a tire size of 235/45 ZR17 in which joints positioned at approximately constant intervals in the peripheral direction are arranged in the innerliner, the carcass ply and the belt layer, and joints positioned at intervals in a direction along an outer profile at the meridional section of the tire and continuously extending substantially in the peripheral direction are formed in each of the tread rubber, the bead filler rubber and the side rubber, and a radial force variation (hereinafter referred to as RFV) is measured as an indication of the uniformity and a static balance is measured as an indication of the balance to obtain results shown in FIG. 5.

Moreover, the static balance is determined by setting the tire onto a balancer and attaching a weight to a side portion corresponding to a light point position of the tire so as to render an unbalance quantity into zero to measure a balance as a product of mass of the weight (kg) and a distance from a center of the balance to the attaching position of the weight (cm).

The conventional tire in FIG. 5 is a tire built on a building drum according to the building method described in the conventional technique in which each of the innerliner, the carcass ply, the bead filler rubber, the side rubber and the base rubber and cap rubber of the tread rubber has a joint formed at one place in the peripheral direction through overlap joining and extending substantially in the meridional direction of the tire and continuing over a full peripheral length thereof, and also each of the belt layers has joints extending at a given inclination angle with respect to the meridian of the tire and the same joint extending at one place in the peripheral direction and substantially in the meridional direction and formed through overlap joining.

In the example tire 1, 17 joints positioned at approximately equal intervals in the peripheral direction and extending in the meridional direction of the tire are arranged in only the innerliner and the same joints as in the conventional tire are arranged in each of the carcass ply and the belt layer. In the example tire 2, 17 joints extending in the meridional direction of the tire are arranged in only the carcass ply and each of the innerliner and belt layer has the same structure as in the conventional tire. In the example tire 3, 22 joints extending obliquely with respect to the meridional direction of the tire are arranged in only the belt layer and the same joints as in the conventional tire are arranged in each of the innerliner and carcass ply.

The example tire 4 has a structure shown in FIG. 1, and the example tire 5 has a structure of FIG. 1 added with the side reinforcing rubber (18) shown in FIG. 3, and the example tire 6 has a structure of FIG. 1 provided with the insert reinforcing layer (16) shown in FIG. 2(a) instead of the side reinforcing layer (15), and the example tire 7 is different from the example tire 4 only in that the side rubber is constituted with white rubber and black rubber as shown in FIG. 4(a).

According to FIG. 5 showing the results measured every 100 tires, it is clear that the example tires, particularly example tires 4-7 can advantageously improve both of RFV and static balance as compared with the conventional tire.
Thus, one example tires 1, 2 and 3 are outside the scope of the invention claimed, while one example tires 4, 5, 6 and 7 are within the scope of one invention claimed.

According to the invention, plural joints positioned at approximately equal intervals in the peripheral direction are equally dispersed and arranged in the innerliner, the carcass ply and the belt layer to enhance the homogeneity of the tire in the peripheral direction, and further joints positioned at intervals in a direction along the outer profile at the meridional section of the tire and continuously extending substantially in the peripheral direction are arranged in the tread rubber, the bead filler rubber and the side rubber to eliminate the formation of joints having an extending component in the meridional direction of the tire as far as possible and prevent the lowering of various balances, whereby the uniformity and the balance in the tire can be largely improved as compared with the conventional tire built on the building drum.

## Claims

1. A method of manufacturing a pneumatic tire comprising a carcass (6) comprising one or more carcass plies toroidally extending between a pair of bead cores (4) and wound at a side portion thereof around the bead core outward in a radial direction, a bead filler rubber (7) arranged at an outer peripheral side of each bead core between a main body portion (6a) and a turnup portion (6b) of the carcass, an innerliner arranged at an inner face side of the carcass, a belt (9) arranged on an outer peripheral side of a crown portion of the carcass and comprising one or more belt layers (9a, 9b), a tread rubber (10) arranged on an outer peripheral side of the belt to form a treading face, a side rubber (11) arranged on a outer face side of each side portion of the carcass to form a pair of sidewalls (2) of the tire, **characterized in that** each of the innerliner (8), the carcass plies (5) and the belt layers (9a, 9b) is provided with joints positioned at approximately constant intervals in a peripheral direction, and each of the tread rubber (10), the bead filler rubbers (7) and the side rubbers (11) is provided with joints positioned at intervals in a direction along an outer profile at a meridional section of the tire and extending substantially in the peripheral direction.

2. A method as claimed in claim 1, **characterized in that** the joints in each of the innerliner (8) and the carcass plies (5) are continuous substantially in the meridional direction of the tire.

3. A method as claimed in claim 1 or 2, **characterized in that** the joints in the belt layers (9a, 9b) are continuous at a constant inclination angle with respect to the meridian of the tire.

4. A method as claimed in any of claims 1 to 3, **characterized in that** the interval between the joints in a radially inner end portion of each of the innerliner (8) and the carcass plies (5) is made approximately equal to a size obtained by multiplying or dividing a peripheral length of a circle having a diameter of 25.4 mm (1 inch) by an integral number.

5. A method as claimed in any of claims 1 to 4, **characterized in that** the joints in each of the bead filler rubbers (7) and the side rubbers (11) are spirally extended in the radial direction of the tire.

6. A method as claimed in any of claims 1 to 5, **characterized in that** the joints in the tread rubber (10) are helically extended in the widthwise direction of the tire.

7. A method as claimed in claim 6, **characterized in that** the joints in the tread rubber (10) are continuous from one side part to the other side part in the widthwise direction of the tire.

8. A method as claimed in claim 6, **characterized in that** the joints in the tread rubber (10) are continuous from each side part in the widthwise direction of the tire to a central part in the widthwise direction of the tire.

9. A method as claimed in any of claims 1 to 8, **characterized in that** the tread rubber (10) is constituted with a base rubber (10a) located at an inner layer side and a cap rubber (10b) located at an outer layer side, and the joints extending substantially in the peripheral direction are independently arranged in the base rubber and the cap rubber, respectively.

10. A method as claimed in any of claims 1 to 9, **characterized in that** the tread rubber (10) is provided at a middle part in the widthwise direction of the tire with a high electrically conductive rubber (10c) continuing over the full thickness in the radial direction of the tire, and joints extending substantially in the peripheral direction at intervals in the radial direction of the tire are arranged in the high electrically conductive rubber.

11. A method as claimed in any of claims 1 to 10, **characterized in that** a belt reinforcing layer (12) containing cord(s) extending substantially in the peripheral direction is arranged between the belt (9) and the tread rubber (10), and joints positioned at intervals in a direction along the outer profile of the tire and extending substantially in the peripheral direction are arranged in the belt reinforcing layer.

12. A method as claimed in any of claims 1 to 11, **characterized in that** a squeegee rubber layer is arranged on at least one of the inner face side and the outer face side of the carcass ply (5), and joints extending substantially in the peripheral direction at intervals in a direction along the outer profile in the meridional section of the tire are formed in the squeegee rubber layer.

13. A method as claimed in any of claims 1 to 12, **characterized in that** a belt under cushion rubber (13) is arranged on a side portion of the belt (9) and at its inner face side, and joints extending substantially in the peripheral direction at intervals in a direction along the outer profile in the meridional section of the tire are formed in the belt under cushion rubber.

14. A method as claimed in any of claims 1 to 13, **characterized in that** a tread under cushion rubber is arranged at an inner face side of the tread rubber (10), and joints extending substantially in the peripheral direction at intervals in a direction along the outer profile in the meridional section of the tire are formed in the tread under cushion rubber.

15. A method as claimed in any of claims 1 to 14, **characterized in that** a chafer rubber (14) is arranged on a site of the bead portion (3) at least contacting with a rim flange, and joints extending substantially in the peripheral direction at intervals in a direction along the outer profile in the meridional section of the tire are formed in the chafer rubber.

16. A method as claimed in any of claims 1 to 15, **characterized in that** a side reinforcing layer (15) including cords extending substantially in the peripheral direction of the tire is arranged at an inner face side of the side rubber (11), and joints extending substantially in the peripheral direction at intervals in a direction along the outer profile in the meridional section of the tire are arranged in the side reinforcing layer.

17. A method as claimed in any of claims 1 to 15, **characterized in that** a side reinforcing rubber (18) arranged at a side portion of the tire between the innerliner (8) and the carcass ply (5) and having substantially a crescent shape at the meridional section of the tire is provided with joints positioned at intervals in the direction along the outer profile and extending substantially in the peripheral direction.

## Patentansprüche

1. Verfahren zum Herstellen eines Luftreifens, der eine Karkasse (6), die eine oder mehrere Karkassenlagen umfasst, die sich kreisringförmig zwischen einem Paar von Wulstkernen (4) erstrecken und an einem Seitenabschnitt derselben um den Wulstkern in einer Radialrichtung nach außen gewickelt sind, einen Kernreitergummi (7), der an einer Außenumfangsseite jedes Wulstkerns zwischen einem Hauptkörperabschnitt (6a) und einem Umschlagabschnitt (6b) der Karkasse angeordnet ist, eine Innenschicht, die an einer Innenflächenseite der Karkasse angeordnet ist, einen Gürtel (9), der auf einer Außenumfangsseite eines Scheitelabschnitts der Karkasse angeordnet ist und eine oder mehrere Gürtellagen (9a, 9b) umfasst, einen Laufflächengummi (10), der auf einer Außenumfangsseite des Gürtels angeordnet ist, um eine Lauffläche zu bilden, einen Seitengummi (11), der auf einer Außenflächenseite jedes Seitenabschnitts der Karkasse angeordnet ist, um ein Paar von Seitenwänden (2) des Reifens zu bilden, umfasst, **dadurch gekennzeichnet, dass** jede der Komponenten Innenschicht (8), Karkassenlagen (5) und Gürtellagen (9a, 9b) mit Verbindungen versehen ist, die mit annähernd gleichbleibenden Abständen in einer Umfangsrichtung angeordnet sind, und jede der Komponenten Laufflächengummi (10), Kernreitergummis (7) und Seitengummis (11) mit Verbindungen versehen ist, die mit Abständen in einer Richtung längs eines Außenprofils an einem Achsenschnitt des Reifens angeordnet sind und sich im Wesentlichen in der Umfangsrichtung erstrecken.

2. Verfahren nach Anspruch 1, **dadurch gekennzeichnet, dass** die Verbindungen in jeder der Komponenten Innenschicht (8) und Karkassenlagen (5) im Wesentlichen in der Meridionalrichtung des Reifens durchgehend sind.

3. Verfahren nach Anspruch 1 oder 2, **dadurch gekennzeichnet, dass** die Verbindungen in den Gürtellagen (9a, 9b) in einem gleichbleibenden Neigungswinkel in Bezug auf den Meridian des Reifens durchgehend sind.

4. Verfahren nach einem der Ansprüche 1 bis 3, **dadurch gekennzeichnet, dass** der Abstand zwischen den Verbindungen in einem in Radialrichtung inneren Endabschnitt jeder der Komponenten Innenschicht (8) und Karkassenlagen (5) annähernd gleich einer Größe gestaltet wird, die durch Multiplizieren oder Dividieren einer Umfangslänge eines Kreises, der einen Durchmesser von 25,4 mm (1 Zoll) hat, mit einer oder durch eine ganze Zahl gewonnen wird.

5. Verfahren nach einem der Ansprüche 1 bis 4, **dadurch gekennzeichnet, dass** sich die Verbindungen in jeder der Komponenten Wulstreitergummis (7) und Seitengummis (11) spiralförmig in der Radialrichtung des Reifens erstrecken.

6. Verfahren nach einem der Ansprüche 1 bis 5, **dadurch gekennzeichnet, dass** sich die Verbindungen in dem Laufflächengummi (10) schraubenförmig in der Breitenrichtung des Reifens erstrecken.

7. Verfahren nach Anspruch 6, **dadurch gekennzeichnet, dass** die Verbindungen in dem Laufflächengummi (10) von dem einen Seitenteil zu dem anderen Seitenteil in der Breitenrichtung des Reifens durchgehend sind.

8. Verfahren nach Anspruch 6, **dadurch gekennzeichnet, dass** die Verbindungen in dem Laufflächengummi (10) von jedem Seitenteil in der Breitenrichtung des Reifens bis zu einem Mittelteil in der Breitenrichtung des Reifens durchgehend sind.

9. Verfahren nach einem der Ansprüche 1 bis 8, **dadurch gekennzeichnet, dass** der Laufflächengummi (10) aus einem Basisgummi (10a), der an einer Innenlagenseite angeordnet ist, und einem Kappengummi (10b), der an einer Außenlagenseite angeordnet ist, besteht und die Verbindungen, die sich im Wesentlichen in der Umfangsrichtung erstrecken, unabhängig in dem Basisgummi bzw. dem Kappengummi angeordnet sind.

10. Verfahren nach einem der Ansprüche 1 bis 9, **dadurch gekennzeichnet, dass** der Laufflächengummi (10) an einem Mittelteil in der Breitenrichtung des Reifens mit einem stark elektrisch leitenden Gummi (10c) versehen ist, der sich über die gesamte Dicke in der Radialrichtung des Reifens fortsetzt, und in dem stark elektrisch leitenden Gummi Verbindungen bereitgestellt werden, die sich im Wesentlichen in der Umfangsrichtung mit Abständen in der Radialrichtung des Reifens erstrecken.

11. Verfahren nach einem der Ansprüche 1 bis 10, **dadurch gekennzeichnet, dass** eine Gürtelverstärkungslage (12), die Kord(s) enthält, der/die sich im Wesentlichen in der Umfangsrichtung erstrecken, zwischen dem Gürtel (9) und dem Laufflächengummi (10) angeordnet ist und Verbindungen, die mit Abständen in einer Richtung längs des Außenprofils des Reifens angeordnet sind und sich im Wesentlichen in der Umfangsrichtung erstrecken, in der Gürtelverstärkungslage angeordnet sind.

12. Verfahren nach einem der Ansprüche 1 bis 11, **dadurch gekennzeichnet, dass** eine Laufflächenpolster-Gummilage auf wenigstens einer der Innenflächenseite und der Außenflächenseite der Karkassenlage (5) angeordnet ist und Verbindungen, die sich im Wesentlichen in der Umfangsrichtung mit Abständen in einer Richtung längs des Außenprofils in dem Achsenschnitt des Reifens erstrecken, in der Laufflächenpolster-Gummilage geformt sind.

13. Verfahren nach einem der Ansprüche 1 bis 12, **dadurch gekennzeichnet, dass** ein Gürtel-Unterpolstergummi (13) an einem Seitenabschnitt des Gürtels (9) und an dessen Innenflächenseite angeordnet ist und Verbindungen, die sich im Wesentlichen in der Umfangsrichtung mit Abständen in einer Richtung längs des Außenprofils in dem Achsenschnitt des Reifens erstrecken, in dem Gürtel-Unterpolstergummi geformt sind.

14. Verfahren nach einem der Ansprüche 1 bis 13, **dadurch gekennzeichnet, dass** ein Laufflächen-Unterpolstergummi an einer Innenflächenseite des Laufflächengummis (10) angeordnet ist und Verbindungen, die sich im Wesentlichen in der Umfangsrichtung mit Abständen in einer Richtung längs des Außenprofils in dem Achsenschnitt des Reifens erstrecken, in dem Laufflächen-Unterpolstergummi geformt sind.

15. Verfahren nach einem der Ansprüche 1 bis 14, **dadurch gekennzeichnet, dass** ein Wulstschutzbandgummi (14) an einer Stelle des Wulstabschnitts (3) angeordnet ist, die wenigstens einen Felgenflansch berührt, und Verbindungen, die sich im Wesentlichen in der Umfangsrichtung mit Abständen in einer Richtung längs des Außenprofils in dem Achsenschnitt des Reifens erstrecken, in dem Wulstschutzbandgummi geformt sind.

16. Verfahren nach einem der Ansprüche 1 bis 15, **dadurch gekennzeichnet, dass** eine Seitenverstärkungslage (15), die Kords einschließt, die sich im Wesentlichen in der Umfangsrichtung des Reifens erstrecken, an einer Innenflächenseite des Seitengummis (11) angeordnet ist und Verbindungen, die sich im Wesentlichen in der Umfangsrichtung mit Abständen in einer Richtung längs des Außenprofils in dem Achsenschnitt des Reifens erstrecken, in der Seitenverstärkungslage angeordnet sind.

17. Verfahren nach einem der Ansprüche 1 bis 15, **dadurch gekennzeichnet, dass** ein Seitenverstärkungsgummi (18), der an einem Seitenabschnitt des Reifens zwischen der Innenschicht (8) und der Karkassenlage (5) angeordnet ist und im Wesentlichen eine Halbmondform an dem Achsenschnitt des Reifens hat, mit Verbindungen versehen ist, die mit Abständen in der Richtung längs des Außenprofils angeordnet sind und sich im Wesentlichen in der Umfangsrichtung erstrecken.

## Revendications

1. Procédé de fabrication d'un bandage pneumatique, comprenant une carcasse (6) comprenant une ou plusieurs nappes de carcasse s'étendant toroïdalement entre une paire de tringles (4) et enroulées au niveau d'une partie latérale autour de la tringle, vers l'extérieur dans la direction radiale, une gomme de bourrage sur tringle (7) agencée au niveau d'un côté périphérique externe de chaque tringle, entre une partie de corps principale (6a) et une partie retournée (6b) de la carcasse, une gomme intérieure agencée sur un côté périphérique externe d'une partie de couronne de la carcasse et comprenant une ou plusieurs nappes de ceinture (9a, 9b), une gomme de bande de roulement (10) agencée sur un côté périphérique externe de la ceinture pour former une face de bande de roulement, une gomme latérale (11) agencée sur un côté de face externe de chaque partie latérale de la carcasse pour former une paire de flancs (2) du bandage pneumatique, **caractérisé en ce que** chaque élément, la gomme intérieure (8), les nappes de carcasse (5) et les nappes de ceinture (9a, 9b), comporte des joints positionnés à des intervalles pratiquement constants dans une direction périphérique, chaque élément, la gomme de bande de roulement (10), les gommes de bourrage sur tringle (7) et les gommes latérales (11), comportant des joints positionnés à des intervalles définis dans une direction allant le long d'un profil externe au niveau d'une section méridienne du bandage pneumatique et s'étendant pratiquement dans la direction périphérique.

2. Procédé selon la revendication 1, **caractérisé en ce que** les joints dans chaque élément, la gomme intérieure (8) et les nappes de carcasse (5), sont continus, pratiquement dans la direction méridienne du bandage pneumatique.

3. Procédé selon les revendications 1 ou 2, **caractérisé en ce que** les joints dans les nappes de ceinture (9a, 9b) sont continus au niveau d'un angle d'inclinaison constant par rapport à la méridienne du bandage pneumatique.

4. Procédé selon l'une quelconque des revendications 1 à 3, **caractérisé en ce que** l'intervalle entre les joints dans une partie d'extrémité radialement interne de chaque élément, la gomme intérieure (8) et les nappes de carcasse (5), est pratiquement égal à une dimension obtenue en multipliant ou en divisant une longueur périphérique d'un cercle ayant un diamètre de 25,4 mm (1 pouce) par un nombre entier.

5. Procédé selon l'une quelconque des revendications 1 à 4, **caractérisé en ce que** les joints dans chaque élément, les gommes de bourrage sur tringle (7) et les gommes latérales (11), sont étendus en spirale dans la direction radiale du bandage pneumatique.

6. Procédé selon l'une quelconque des revendications 1 à 5, **caractérisé en ce que** les joints dans la gomme de bande de roulement (10) sont étendus de manière hélicoïdale dans la direction de la largeur du bandage pneumatique.

7. Procédé selon la revendication 6, **caractérisé en ce que** les joints dans la gomme de bande de roulement (10) sont continus d'une partie latérale vers l'autre partie latérale dans la direction de la largeur du bandage pneumatique.

8. Procédé selon la revendication 6, **caractérisé en ce que** les joints dans la gomme de bande de roulement (10) sont continus de chaque partie latérale, dans la direction de la largeur du bandage pneumatique, vers une partie centrale dans la direction de la largeur du bandage pneumatique.

9. Procédé selon l'une quelconque des revendications 1 à 8, **caractérisé en ce que** la gomme de bande de roulement (10) comprend une gomme de base (10a) agencée au niveau d'un côté de nappe interne, et une gomme de chape (10a) agencée au niveau d'un côté de nappe externe, les joints s'étendant pratiquement dans la direction périphérique étant respectivement agencés de manière indépendante dans la gomme de base et dans la gomme de chape.

10. Procédé selon l'une quelconque des revendications 1 à 9, **caractérisé en ce que** la gomme de bande de roulement (10) comporte, au niveau d'une partie centrale dans la direction de la largeur du bandage pneumatique, une gomme à haute conductivité électrique (10c) s'étendant au-dessus de l'ensemble de l'épaisseur dans la direction radiale du bandage pneumatique, des joints s'étendant pratiquement dans la direction périphérique, à des intervalles définis dans la direction radiale du bandage pneumatique, étant agencés dans la gomme à haute conductivité électrique.

11. Procédé selon l'une quelconque des revendications 1 à 10, **caractérisé en ce qu'**une couche de renforcement de ceinture (12) contenant un (des) câblé(s) s'étendant pratiquement dans la direction périphérique, est agencée entre la ceinture (9) et la gomme de bande de roulement (10), des joints positionnés à des intervalles définis dans une direction allant le long du profil externe du bandage pneumatique et s'étendant pratiquement dans la direction périphérique étant agencés dans la couche de renforcement de ceinture.

12. Procédé selon l'une quelconque des revendications 1 à 11 **caractérisé en ce qu'**une couche de gomme de liaison entre plis est agencée sur au moins un côté, le côté de face interne ou le côté de face externe, de la nappe de carcasse (5), des joints s'étendant pratiquement dans la direction périphérique, à des intervalles définis dans une direction allant le long du profil externe dans la section méridienne du bandage pneumatique étant formés dans la couche de gomme de liaison entre plis.

13. Procédé selon l'une quelconque des revendications 1 à 12, **caractérisé en ce qu'**une gomme de coussin de la ceinture (13) est agencée sur une partie latérale de la ceinture (9) au niveau de son côté de face interne, des joints s'étendant pratiquement dans la direction périphérique à des intervalles définis dans une direction allant le long du profil externe dans la section méridienne du bandage pneumatique étant formés dans la gomme de coussin de la ceinture.

14. Procédé selon l'une quelconque des revendications 1 à 13, **caractérisé en ce qu'**une gomme de coussin de la bande de roulement est agencée au niveau d'un côté de face interne de la gomme de bande de roulement (10), des joints s'étendant pratiquement dans la direction périphérique à des intervalles définis dans une direction allant le long du profil externe dans la section méridienne du bandage pneumatique étant formés dans la gomme de coussin de la bande de roulement.

15. Procédé selon l'une quelconque des revendications 1 à 14, **caractérisé en ce qu'**une gomme sous bandelette (14) est agencée sur un site de la partie de talon (3), contactant au moins un rebord de jante, des joints s'étendant pratiquement dans la direction périphérique, à des intervalles définis dans une direction allant le long du profil externe dans la section méridienne du bandage pneumatique étant formés dans la gomme sous bandelette.

16. Procédé selon l'une quelconque des revendications 1 à 15, **caractérisé en ce qu'**une couche de renforcement latérale (15) englobant des câblés s'étendant pratiquement dans la direction périphérique du bandage pneumatique, est agencée au niveau d'un côté de face interne de la gomme latérale (11), des joints s'étendant pratiquement dans la direction périphérique à des intervalles définis dans une direction allant le long du profil externe dans la section méridienne du bandage pneumatique étant agencés dans la couche de renforcement latérale.

17. Procédé selon l'une quelconque des revendications 1 à 15, **caractérisé en ce qu'**une gomme de renforcement latérale (18), agencée au niveau d'une partie latérale du bandage pneumatique, entre la gomme intérieure (8) et la nappe de carcasse (5) et ayant pratiquement une forme en croissant au niveau de la section méridienne du bandage pneumatique, comporte des joints positionnés à des intervalles définis dans la direction allant le long du profil externe et s'étendant pratiquement dans la direction périphérique.
